(19) Europäisches Patentamt
European Patent Office
Office européen des brevets

(11) EP 0 687 149 B1

(12) FASCICULE DE BREVET EUROPEEN

(45) Date de publication et mention
de la délivrance du brevet:
**22.12.1999 Bulletin 1999/51**

(21) Numéro de dépôt: **94907457.9**

(22) Date de dépôt: **03.03.1994**

(51) Int. Cl.$^6$: **A23P 1/02**, A23L 1/0528,
A23L 1/054, A23L 1/308

(86) Numéro de dépôt international:
**PCT/BE94/00019**

(87) Numéro de publication internationale:
**WO 94/19973 (15.09.1994 Gazette 1994/21)**

(54) **COMPOSITION AGGLOMEREE, PROCEDE POUR SON OBTENTION ET PRODUITS ALIMENTAIRES CONTENANT LADITE COMPOSITION**

AGGLOMERIERTE ZUSAMMENSETZUNG, VERFAHREN ZU IHRER HERSTELLUNG UND DIESE ZUSAMMEENSETZUNG ENTHALTENDE NAHRUNGSMITTEL

PELLETIZED COMPOSITION, PREPARATION METHOD THEREFOR AND FOOD PRODUCTS CONTAINING SAME

(84) Etats contractants désignés:
**AT BE DE ES FR GB NL**

(30) Priorité: **03.03.1993 BE 9300210**

(43) Date de publication de la demande:
**20.12.1995 Bulletin 1995/51**

(73) Titulaire:
**"Raffinerie Tirlemontoise", société anonyme:
1150 Bruxelles (BE)**

(72) Inventeurs:
• **SMITS, Georges
B-9308 Gijzegem-Aalst (BE)**
• **DAENEKINDT, Luc
B-9308 Gijzegem-Aalst (BE)**
• **BOOTEN, Karl
B-3450 Geetbets (BE)**

(74) Mandataire:
**Van Malderen, Joelle et al
Office Van Malderen,
Place Reine Fabiola 6/1
1083 Bruxelles (BE)**

(56) Documents cités:
EP-A- 0 207 384        EP-A- 0 517 423
EP-A- 0 524 484        WO-A-89/09287
WO-A-92/08371        US-A- 4 871 574
US-A- 5 169 671

## Description

### Objet de l'invention

La présente invention concerne une nouvelle composition agglomérée destinée en particulier à la préparation d'une composition ayant une structure crémeuse.

L'invention concerne également un procédé de préparation de la composition agglomérée, un procédé de préparation d'une composition ayant une structure crémeuse en utilisant ladite composition agglomérée, ainsi que ladite composition à structure crémeuse ainsi obtenue et les produits alimentaires comprenant lesdites compositions agglomérées et/ou ayant une structure crémeuse.

### Arrière-plan technologique à la base de l'invention

Dans le contexte d'une alimentation saine et équilibrée, plus en rapport avec notre mode de vie sédentaire, il existe un besoin de compositions alimentaires répondant aux exigences d'une part d'une teneur réduite en calories, en graisses et en sucre et d'autre part, d'une teneur élevée en fibres alimentaires et favorisant le développement d'une flore intestinale bénéfique.

Ces compositions alimentaires doivent en outre répondre à des qualités organoleptiques (aspect, texture, goût, sensation en bouche) qui ne peuvent être inférieures aux aliments traditionnels.

Des fructanes tels que l'inuline, peuvent répondre à ces exigences.

C'est ainsi que le produit RAFTILINE$^®$ a été mis au point et commercialisé par la Raffinerie Tirlemontoise. Le RAFTILINE$^®$ jouit de propriétés nutritionnelles intéressantes permettant de satisfaire aux exigences d'une alimentation équilibrée telles qu'énoncées ci-dessus. Citons son effet bifidogène, son comportement de fibre alimentaire et sa très basse valeur calorique (~ 1 kcal/g).

Au point de vue organoleptique, le RAFTILINE$^®$ se caractérise par un goût légèrement sucré (10% de celui du saccharose) sans arrière-goût et par une odeur neutre.

Une des propriétés fonctionnelles du RAFTILINE$^®$ qui limite son utilisation dans les compositions alimentaires susmentionnées est sa solubilité.

Le RAFTILINE$^®$ contient de l'inuline, substance que l'on peut obtenir facilement à partir de nombreuses plantes très répandues, plus spécifiquement dans le cas du RAFTILINE$^®$, à partir du Cichorium intybus, la chicorée.

L'inuline est une composition polydispersée de saccharides de formule générale GFn (G = glucose, F = fructose, n = nombre d'unités de fructose liées (n ≥ 2), les unités de fructose étant liées entre elles essentiellement par des liaisons β (2 → 1).

Etant un mélange de molécules de longueurs différentes, le degré de polymérisation (DP = n + 1) de l'inuline de chicorée varie de 2 à plus de 60.

Le degré de polymérisation est un paramètre important dans la mesure où il influence la solubilité de l'inuline.

Le RAFTILINE$^®$ est très peu soluble. La mise en solution de l'inuline est fonction de la concentration finale voulue et de la température. Ainsi, par exemple, la mise en solution complète ne se fait qu'à des températures supérieures à 85°C. A 60°C, on peut arriver à une solution aqueuse contenant 25% d'inuline. Toutefois, à température ambiante seulement 10% environ d'inuline ayant un DP moyen d'environ 9 peut être dissoute dans l'eau.

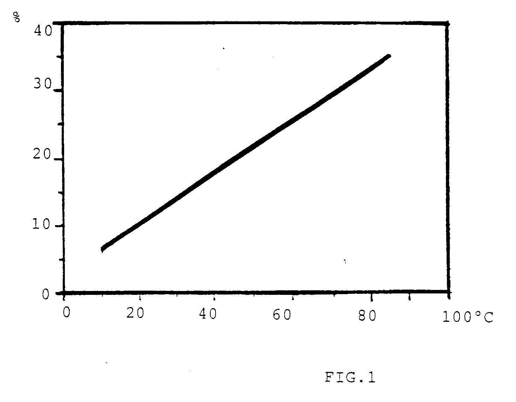

La figure 1 annexée représente la courbe de solubilité du RAFTILINE$^®$ ST en fonction de la température.

Il est donc pratiquement impossible d'ajouter aux préparations alimentaires des solutions concentrées d'inuline.

Une alternative consiste en l'incorporation de l'inuline sous forme de poudre mais ceci a comme inconvénient que les produits alimentaires obtenus ont souvent une texture sableuse. De plus, il est souvent très difficile, si ce n'est impossible, d'ajouter des quantités importantes de poudre d'inuline dans des produits alimentaires de façon à ce que l'inuline y soit dispersée uniformément. On observe par exemple la formation de grumeaux, et l'apparition de dépôt.

Pour pallier à ces inconvénients, la demanderesse a mis au point et a décrit dans la demande de brevet publiée sous le no. WO93/06744, des compositions ayant une structure crémeuse et comprenant du fructane ou un mélange de fructanes (p. ex. du RAFTILINE$^®$) et un liquide. Les fructanes sont l'élément essentiel pour la formation de ladite structure crémeuse. La demande de brevet décrit également le procédé de préparation de ces compositions et leur utilisation.

Ces compositions ayant une structure crémeuse, ne sont obtenues qu'en soumettant le ou les fructanes et le liquide à des forces de cisaillement importantes.

L'on peut ainsi préparer une gamme de crèmes dont les concentrations en inuline varient de 5 à 85% ou plus, et de préférence de 20 à 50%.

Cependant, pour assurer des forces de cisaillement importantes, ces procédés de préparation nécessitent l'usage de mixers, de réacteurs à ultrasons, de broyeurs à boules, d'homogénéisateurs, de moulins colloïdaux et/ou

2

d'appareils de cisaillement à haute vitesse tels qu'un hydroshear ou un Ultra-Turrax®.

De tels appareils sont souvent coûteux et difficiles à mettre en oeuvre lorsque de grands volumes de "crème" doivent être produits.

De plus, lors de la préparation de la composition à structure crémeuse, il peut se produire des dépôts et/ou des grumeaux au sein de la composition et/ou sur les appareils de cisaillement, ce qui perturbe les propriétés organoleptiques des produits alimentaires dans lesquels ladite composition est incorporée et/ou rend difficile leur préparation.

Dans le domaine de l'alimentation, une composition agglomérée qui résulte d'un procédé d'agglomération est généralement appelée "produit soluble" ou encore "produit minute". Le produit alimentaire qui est obtenu après qu'on ait ajouté un liquide est souvent appelé "produit instantané".

Ainsi, on connaît des produits alimentaires instantanés sous forme de liquide comprenant de l'inuline.

Dans le cas du "thé soluble" tel que décrit dans le document EP-524.484, l'inuline est utilisée comme matière de support pour les composants aromatiques et autres extraits de la matière première. Dans le thé instantané, l'inuline se solubilise.

On connaît également du FIBRULINE® Instant (Cosucra, Belgique). Il s'agit d'une composition d'inuline en poudre qui a une taille moyenne de grains plus importante que le FIBRULINE® standard en poudre (Cosucra, Belgique) et qui serait plus aisé à solubiliser.

## Buts de l'invention

La présente invention concerne une nouvelle composition agglomérée comprenant un fructane ou un mélange de fructanes qui, lorsque ladite composition est mélangée à un liquide tel que de l'eau, forme instantanément une dispersion colloïdale homogène, puis une structure crémeuse homogène, aux propriétés organoleptiques comparables ou améliorées par rapport aux propriétés des compositions à structure crémeuse de l'état de la technique.

Un autre but de la présente invention est d'obtenir une dispersion homogène de ladite composition à des concentrations importantes en fructane, de l'ordre de 20 à 50%, qui sont supérieures à la concentration correspondant au point de solubilité dans l'eau.

Un but complémentaire de la présente invention vise à fournir une composition qui permet de préparer une composition ayant une structure crémeuse lisse et homogène par mélange avec un liquide sans devoir soumettre ce mélange à des forces de cisaillement importantes par les dispositifs de l'état de la technique.

La présente invention vise également à mettre au point un procédé de préparation de ladite composition agglomérée ainsi qu'un nouveau procédé de préparation d'une composition ayant une structure crémeuse à l'aide de ladite composition agglomérée.

## Eléments caractéristiques de l'invention

La présente invention concerne une nouvelle composition agglomérée comprenant au moins un fructane et étant à dispersion colloïdale instantanée, qui forme une structure crémeuse.

Par composition agglomérée, on entend le produit qui résulte d'une agglomération effectuée pour augmenter la grosseur des grains (la granulométrie) d'un produit déjà sous forme de poudre. Vu que des produits sous forme de poudre ont tendance à être hydrophobes, l'agglomération améliore leur dispersion immédiate et instantanée dans l'eau. Les agglomérats sont des structures légèrement liées avec des espaces vides donnant une impression de mousse.

Ainsi, une composition agglomérée se distingue par la taille moyenne des grains plus importante.

On entend par dispersion colloïdale instantanée le fait que lesdites compositions agglomérées se dispersent immédiatement et donc instantanément dans l'eau dans des domaines de concentrations supérieurs au point de solubilité. On obtient alors un système en deux phases dont une comprend les colloïdes (phase dispersée) distribuée à travers la substance de masse (phase continue) qui est le liquide.

Les compositions ayant une structure crémeuse qui se forment à l'aide des compositions agglomérées selon l'invention sont stables et homogènes; elles ne montrent ni dépôt, ni floculation, ni séparation en deux couches, et ce même sous une action physique. Les compositions ayant une structure crémeuse retiennent leur texture de crème homogène lorsqu'elles sont chauffées à des températures auxquelles le fructane ou le mélange de fructanes n'est pas complètement et parfaitement solubilisé.

L'aspect et la consistance de la composition ayant une structure crémeuse peut varier fortement, par exemple entre l'aspect et la consistance d'une sauce de type dressing (liquide très visqueux) à l'aspect et la consistance d'une crème cosmétique ou de la margarine, et même jusqu'à la forme la plus dure du beurre froid. Toutefois, ces compositions ont une sensation grasse et crémeuse en bouche, comparable aux propriétés organoleptiques des compositions ayant une structure crémeuse décrites dans le document WO93/06744. Les compositions ne donnant pas l'impression d'être sableuses.

De préférence, le fructane présent dans la composition agglomérée est un fructane linéaire, un fructane ramifié ou un fructane partiellement hydrolysé.

Avantageusement, ledit fructane est de l'inuline.

L'invention concerne également un procédé de préparation de ladite composition agglomérée qui consiste à humidifier un fructane ou un mélange de fructanes sous forme de poudre ou sous forme de granules à l'aide d'eau en phase liquide ou en phase vapeur, dans une chambre d'agglomération en présence d'air chaud, et ensuite à refroidir et à tamiser la composition agglomérée afin de retenir le produit de granulométrie adéquate, en recyclant les compositions trop fines (fines) et les agglomérats hors normes.

Avantageusement, on dose dans une chambre d'agglomération verticale entre 40 et 90% en poids d'eau par rapport au fructane et/ou au mélange de fructanes, la température régnant dans cette chambre étant comprise entre 70°C et 100°C; le temps de maintien dans ladite chambre d'agglomération étant de l'ordre de quelques dizaines de secondes.

De préférence, lors du séchage, on réduit la teneur en humidité du produit jusqu'à une valeur inférieure à 5%.

Le refroidissement et la séparation des agglomérats selon l'invention sont réalisés avantageusement à l'aide d'un lit fluidisé. Le lit fluidisé peut également servir pour un séchage final des agglomérats sortant de la chambre d'agglomération.

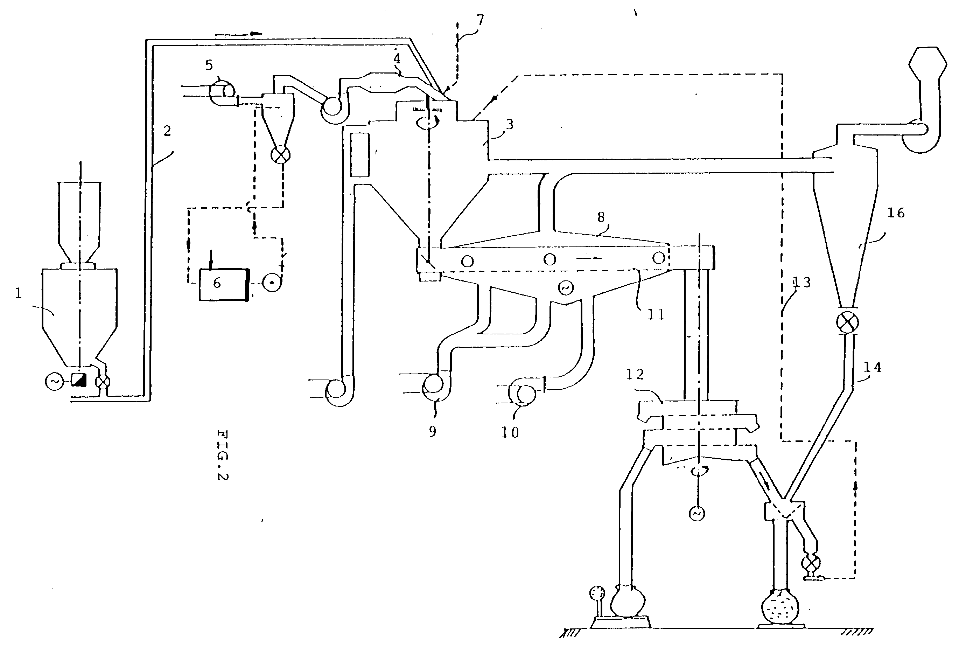

Un autre procédé de préparation peut être réalisé dans une installation représentée de manière schématique à la figure 2 annexée. Une telle installation est déjà décrite pour la préparation de produits à base de saccharose contenant des édulcorants à haut pouvoir sucrant, dans la demande de brevet WO-89/09287.

Optionnellement, on peut réaliser la préparation d'une composition agglomérée en continu. A cet effet, le fructane, ou le mélange de fructanes, est introduit dans la chambre d'agglomération sous forme d'une solution. Les fines et les agglomérats hors normes qui sortent de la chambre sont recyclés dans la chambre et humidifiés par la solution de fructane(s) introduite en continu. Ainsi, se seront les fines et les agglomérats hors normes recyclés qui seront le produit de départ pour la préparation d'une composition agglomérée selon l'invention et qui sont comparables à la poudre ou aux granules du procédé de préparation décrit précédemment.

De préférence, la solution de fructane(s) administrée de façon continue comprend de l'inuline dans un domaine de concentration pouvant varier de 1 à 50% en matière sèche.

Un autre aspect de l'invention se rapporte à un nouveau procédé de préparation d'une composition ayant une structure crémeuse dans lequel on mélange, de préférence sous agitation, la composition agglomérée selon l'invention et un liquide tel que de l'eau, du lait, du blanc d'oeuf, du jaune d'oeuf, du sirop de saccharose, etc.

De préférence, on mélange entre 250 et 1000 g de la composition agglomérée selon l'invention par litre de liquide pour obtenir une concentration de l'ordre de 20 à 50% en poids.

Ainsi, l'invention concerne également une composition ayant une structure crémeuse obtenue en utilisant la composition agglomérée selon l'invention et plus particulièrement celle obtenue par le procédé précédemment décrit.

Un dernier aspect de l'invention se rapporte à un produit alimentaire qui comprend une composition agglomérée selon l'invention et/ou une composition ayant une structure crémeuse obtenue selon le procédé de l'invention.

Il est évident que d'autres substances peuvent être ajoutées par simple mélange à sec soit aux fructanes de départ, soit à la composition agglomérée ou encore lors de la préparation du produit alimentaire.

Ainsi peuvent être ajoutés des colorants, des conservateurs, des antioxygènes, des exhausteurs de goût, des arômes et des édulcorants.

Dans les divers procédés de préparation selon l'invention, ces substances peuvent aussi être incorporées dans la solution de fructane utilisée pour préparer la composition de départ en poudre ainsi que dans la phase liquide utilisée pour humidifier ou encore dans le liquide utilisé pour préparer la composition crémeuse selon l'invention.

A titre d'illustration, l'invention sera décrite de manière plus détaillée à l'aide des exemples suivants.

## Exemple I

Du RAFTILINE® ST (sous forme de poudre) et/ou du RAFTILINE® GR (sous forme de granules) est introduit dans un réservoir de stockage 1 (on se réfère à la figure 2 annexée) d'où il est prélevé par le conduit 2 pour être introduit dans une chambre d'agglomération verticale 3.

Dans cette chambre, on introduit de l'air chauffé par vapeur, à une température comprise entre 70°C et 100°C par le conduit 4, la vapeur étant produite par des installations adéquates.

Dans ce cas-ci, l'air, chauffé par le réchauffeur 6 est propulsé par le ventilateur 5 sur le plateau tournant disposé au sommet de la chambre. L'humidification s'effectue par de la vapeur injectée par la conduite 7.

La matière est maintenue en suspension dans la chambre d'agglomération en atmosphère humide et les particules s'agglomèrent entre elles.

Dans la première partie d'un sécheur/refroidisseur 8, alimenté en air chaud à 120°C par une soufflerie 9, le séchage s'effectue à l'air sec soufflé en-dessous et à travers un tapis 11 qui transporte la matière d'une extrémité à l'autre de la chambre 8.

Ensuite, la matière est refroidie dans la deuxième partie de la chambre 8, alimentée par la soufflerie 10, le refroidissement s'effectuant à l'air froid, cette fois soufflé en-dessous et à travers le tapis 11.

On obtient la granulométrie souhaitée par tamisage sur un tamis 12. Les agglomérats fins séparés sont recyclés par le conduit 13 à la chambre 3.

Un prélèvement d'air est prévu aussi bien à la sortie de la chambre 3 que du sécheur/refroidisseur 8. L'air qui entraîne nécessairement des agglomérats fins est recueilli dans le conduit 15, les fins sont séparés dans le cyclone 16 et recyclés par les conduits 13 et 14 comme indiqué.

La capacité horaire de cette installation est de l'ordre de 300 kg de produit.

Au départ de RAFTILINE® GR, respectivement de RAFTILINE® ST, l'on obtient par ledit procédé des compositions agglomérées, dénommées RAFTILINE® GRI, respectivement RAFTILINE® GRI*.

## Exemple II

Selon une autre forme de la présente invention, on utilise dans une chambre d'agglomération verticale de l'eau froide comme agent d'humidification au lieu de vapeur dans l'installation susmentionnée et on obtient au départ de RAFTILINE® ST, un produit aggloméré dénommé RAFTILINE® GRS.

Les compositions agglomérées, obtenues selon le procédé susmentionné, se distinguent du RAFTILINE® ST et GR par une taille moyenne des grains plus importante.

Le tableau 1 annexé reprend, à titre illustratif, les valeurs des analyses granulométriques des différents types d'inulines commerciales. Ces analyses furent effectuées sur un échantillon de 100 g à l'aide de tamis standards selon la norme DIN 4188 et les résultats exprimés en pourcentage cumulé.

Avec un liquide, les RAFTILINE® GRI, GRI* et GRS forment des compositions crémeuses sans avoir recours à des forces de cisaillement importantes tel qu'illustré par les exemples de préparation développés ci-après.

Les RAFTILINE® ST et GR, de même que le FIBRULINE® Instant ne donnent pas lieu à la formation de compositions ayant une structure crémeuse selon l'invention.

## Exemple III

Verser en une fois 30 g de RAFTILINE® GRI ou de RAFTILINE® GRI* ou de RAFTILINE® GRS dans un bécher contenant 70 cm³ d'eau à température ambiante. Mélanger l'eau et l'inuline en imprimant à la main un mouvement de rotation au bécher. Il ne se produit pas de dépôt, contrairement à ce qui se passe lorsque l'on utilise du RAFTILINE® ST, GR ou de la FIBRULINE® Instant.

## Exemple IV

Verser par petites quantités 30 g de RAFTILINE® GRI ou de RAFTILINE® GRI* ou de RAFTILINE® GRS dans un bécher contenant 70 cm³ d'eau à température ambiante tout en mélangeant à l'aide d'une cuiller. Il n'y a pas de dépôt, au contraire de ce qui se passe lorsque l'on utilise les RAFTILINE® ST et GR, ainsi que la FIBRULINE® Instant.

## Exemple V

Verser par petites quantités, 30 g de RAFTILINE® GRI ou de RAFTILINE® GRI* ou de RAFTILINE® GRS dans un bécher contenant 70 cm³ d'eau à température ambiante tout en mélangeant à l'aide d'un agitateur mécanique.

La formation de la crème ainsi que ses caractéristiques physiques et organoleptiques sont influencées par le produit de départ ainsi que par le mode de préparation de la crème utilisé.

Ainsi, au départ de RAFTILINE® GRI, et quel que soit le mode de préparation mis en oeuvre parmi ceux cités ci-dessus, il a été constaté une dispersion quasi immédiate de la composition agglomérée au sein du liquide, sans formation de grumeaux ni de dépôt, avec formation d'une structure crémeuse stable après un temps de repos de 2 à 3 heures à température ambiante.

La formation de crèmes d'inuline selon la présente invention présente donc un avantage non négligeable par rapport aux procédés décrits dans la demande de brevet PCT/BE92/00042 au nom de la Raffinerie Tirlemontoise et qui font appel à des forces de cisaillement élevées.

En ce qui concerne les propriétés physiques des crèmes d'inuline, celles-ci sont influencées par le type d'inuline qui est agglomérée, le type de composition agglomérée qui est mise en oeuvre et par le mode de préparation de la crème. Ainsi, par exemple, l'effet de ces paramètres sur la dureté de la crème est illustré dans le tableau 2 annexé.

Les duretés ont été mesurées à l'aide de l'appareil Stevens LFRA Texture et analysées avec les paramètres suivants:

vitesse:        0,2 mm/sec

profondeur:    5 mm

Les crèmes obtenues selon le procédé qui fait l'objet de la présente invention présentent un aspect lisse et brillant, davantage encore dans le cas de crèmes préparées au départ de RAFTILINE® GRI. Dans les mêmes conditions, les RAFTILINE® ST et GR, ainsi que la FIBRULINE® Instant ne donnent pas lieu à la formation de crèmes.

En ce qui concerne les caractéristiques organoleptiques, les crèmes ainsi obtenues présentent une sensation grasse et crémeuse dans la bouche, comparable aux propriétés organoleptiques des crèmes de l'état de la technique.

## Exemple VI: Mix pour crème glacée

Ce type de produit sert à fabriquer des compositions reconstituées de crème glacée utilisées dans la préparation de crèmes glacées de type "soft ice".

Ajouter un émulsifiant et des arômes à du lait concentré écrémé. Mélanger jusqu'à l'obtention d'un mélange homogène. Chauffer à 80°C et maintenir cette température pendant 30 secondes (pasteurisation). Sécher le mélange par atomisation ("spray-drying") et incorporer par mélange le RAFTILINE® GRI (ou GRI*, ou GRS) et le sucre.

En mélangeant le mix en poudre ainsi obtenu avec de l'eau dans un rapport 1:2, l'on obtient une préparation pour crème glacée de type "soft ice" dépourvue de matière grasse.

Composition de la coudre sèche (% en poids)

| | |
|---|---|
| Sucre | 35,50 |
| Poudre de lait écrémé | 34,91 |
| RAFTILINE® GRI/ou GRI*/ ou GRS | 26,63 |
| Stabilisateur (Grinsted Cremodan SE 30) | 1,48 |
| Arôme de vanille (Silesia 111/8309280) | 1,18 |
| Arôme de crème (Quest Int. NN 07172) | 0,30 |

## Exemple VII: Préparation de fruits

Quantités à mettre en oeuvre

| | |
|---|---|
| Fraises (10,5% de M.S.) | 50 kg |
| RAFTILINE® GRI (ou GRI*, ou GRS) | 20 kg |
| Sucre | 35 kg |
| Eau | 12,5 litres |
| Pectine (Hercules Genu Pectin 150° USA-SAG | 0,50 kg |
| Acide citrique (50%) | 0,50 litre |
| Arôme/ colorant | Q.S. |

Procédé de préparation

Réduire partiellement les fraises en purée. Ajouter le sucre et le RAFTILINE® GRI ou GRI* ou GRS.

Mélanger à l'aide d'un mélangeur mécanique et porter à ébullition. Ajouter la pectine, dissoute dans de l'eau à 60°C, et porter à ébullition tout en mélangeant jusqu'à l'évaporation d'environ 18,5 kg d'eau.

Eloigner de la source de chaleur et ajouter l'arôme, le colorant et l'acide citrique (le plus tard possible). Conditionner en bocaux.

Laisser refroidir à température ambiante avant de fermer les bocaux de façon hermétique. Conserver au réfrigérateur.

L'on obtient ainsi une préparation de fruits dont la valeur calorique est réduite de 25% par rapport à une préparation standard (à base de 55% de sucre)

Ajoutée p.ex. à du yoghourt ou du fromage frais maigre à un taux de l'ordre de 20%, cette préparation de fruits procure une texture plus lisse et une sensation en bouche plus crémeuse et plus onctueuse que dans le cas d'utilisation du seul sucre dans la préparation de fruits.

**Exemple VIII: Saucisse de Francfort**

Composition (% en poids)

| | |
|---|---|
| Viande de porc (20% de graisse) | 30 |
| Epaule de porc (50% de graisse) | 10 |
| Eau | 40,80 |
| RAFTILINE® GRI, ou GRI* ou GRS | 12,50 |
| Amidon | 2,0 |
| Caséine | 2,0 |
| Phosphate | 0,30 |
| Nitrite de sodium | 1,30 |
| Acide ascorbique | 0,10 |
| Epices | 1,00 |

Procédé de préparation

Ajouter les sels et l'eau à la viande et moudre le tout dans un cutter jusqu'à obtention d'une pâte homogène.

Ajouter ensuite le RAFTILINE® GRI, ou GRI* ou GRS, la caséine et l'amidon et moudre jusqu'à l'obtention de la texture souhaitée. Conditionner le produit et lui faire subir le traitement thermique suivant:

séchage: 60°C, 30 minutes
fumage: 65°C, 35 minutes
cuisson: 80°C, 30 minutes
refroidissement: 20°C, 5 minutes.

La conservation des saucisses se tait à 4°C.

### Exemple IX: Fourrage de biscuits

Composition (% en poids)

| Solution de sucre (63% matière sèche) | 43,80 |
|---|---|
| Miel (80% matière sèche) | 34,60 |
| RAFTILINE® GRS | 21,60 |

Procédé de préparation

Homogénéiser la solution de sucre et le miel et verser le RAFTILINE® GRS tout en mélangeant à l'aide d'une cuiller. Laisser reposer. Le fourrage ainsi préparé a une sensation en bouche plus crémeuse et plus onctueuse qu'un fourrage préparé sans utilisation de RAFTILINE® GRS.

TABLEAU 1

| Grosseur des grains (mm) | RAFTILINE® ST | RAFTILINE® GR | FIBRULINE® INSTANT | RAFTILINE® GRI | RAFTILINE® GRI* | RAFTILINE® GRS |
|---|---|---|---|---|---|---|
| > 0,800 | | | 4,7 | 1,2 | 2,4 | 2,0 |
| > 0,710 | | | 5,6 | 4,2 | 3,6 | 4,1 |
| > 0,500 | | | 9,9 | 13,4 | 14 | 6,3 |
| > 0,400 | | | 12,9 | 27 | 26,6 | 9,3 |
| > 0,315 | | | 18,6 | 49 | 45,8 | 12,9 |
| > 0,250 | | | 24,4 | 81,4 | 73 | 19 |
| > 0,200 | | | 32,2 | 93,4 | 87,8 | 28,4 |
| > 0,180 | | | 39,0 | 95,6 | 92,4 | 34,8 |
| > 0,140 | | | 49,8 | 97,8 | 95,4 | 46,8 |
| > 0,125 | 1,4 | 3,5 | 57,9 | 98,5 | 97,0 | 61,0 |
| > 0,100 | 4,4 | 12,5 | 77,5 | 99,2 | 98,4 | 81,6 |
| > 0,071 | 35,4 | 49,3 | 95,4 | 99,7 | 99,6 | 99,3 |
| > 0,050 | 65,0 | 72,7 | 97,4 | 99,8 | 100,0 | 99,8 |
| > 0,040 | 82,2 | 83,9 | 97,4 | 99,9 | - | 99,9 |

TABLEAU 2

| Type d'inuline | Concentration en inuline (%) | Mode de préparation | Dureté (g) |
|---|---|---|---|
| GRI | 30 | selon l'exemple III | 80 |
| GRI | 30 | selon l'exemple IV | 82 |
| GRI | 30 | selon l'exemple V | 66 |

TABLEAU 2 (suite)

| Type d'inuline | Concentration en inuline (%) | Mode de préparation | Dureté (g) |
|---|---|---|---|
| GRI* | 30 | selon l'exemple III | 122 |
| GRI* | 30 | selon l'exemple IV | 118 |
| GRS | 30 | selon l'exemple III | 11 |
| GRS | 30 | selon l'exemple IV | 61 |
| GRS | 30 | selon l'exemple V | 38 |

**Revendications**

1. Composition agglomérée caractérisée en ce qu'elle comprend au moins un fructane, en ce que la composition agglomérée est à dispersion colloïdale instantanée, et apte à former une structure crémeuse stable et homogène en mélangeant ladite composition agglomérée et un liquide tel que de l'eau, sans avoir recours à des forces de cisaillement importantes.

2. Composition selon la revendication 1, caractérisée en ce que le fructane est un fructane linéaire, un fructane ramifié et/ou un fructane partiellement hydrolysé.

3. Composition selon la revendication 1 ou 2, caractérisée en ce que le fructane est de l'inuline.

4. Procédé de préparation d'une composition agglomérée selon l'une quelconque des revendications précédentes, caractérisé en ce qu'il consiste à humidifier un fructane ou un mélange de fructanes sous forme de poudre et/ou sous forme de granules à l'aide d'eau en phase liquide ou en phase vapeur dans une chambre d'agglomération en présence d'air chaud, et ensuite à refroidir et tamiser ladite composition agglomérée afin de retenir le produit de granulométrie adéquate en recyclant les fines et les agglomérats hors norme.

5. Procédé selon la revendication 4, caractérisé en ce que l'on dose dans la chambre d'agglomération entre 40 et 90% en poids d'eau par rapport au fructane ou au mélange de fructanes, la température régnant dans cette chambre étant comprise entre 70 et 100 °C, le temps de maintien dans ladite chambre d'agglomération étant de l'ordre de quelques dizaines de secondes.

6. Procédé selon la revendication 4, caractérisé en ce que le fructane ou le mélange de fructanes est introduit dans la chambre d'agglomération sous forme d'une solution qui sert également à humidifier les fines et les agglomérats hors norme recyclés.

7. Procédé selon l'une quelconque des revendications 4 à 6, caractérisé en ce que le fructane utilisé est de l'inuline dans un domaine de concentration de 1 à 50% de matière sèche.

8. Procédé selon l'une quelconque des revendications 4 à 7, caractérisé en ce que lors du séchage final, l'on réduit la teneur en humidité du produit jusqu'à une valeur inférieure à 5%.

9. Procédé selon l'une quelconque des revendications 4 à 8, caractérisé en ce que le séchage final et le refroidissement ultérieur sont réalisés à l'aide d'un lit fluidisé.

10. Procédé de préparation d'une composition ayant une structure crémeuse stable et homogène, caractérisé en ce que l'on mélange la composition agglomérée selon l'une quelconque des revendications 1 à 3 avec un liquide sans avoir recours à des forces de cisaillement importantes.

11. Procédé selon la revendication 10, caractérisé en ce que le mélange s'effectue sous agitation sans avoir recours à des forces de cisaillement importantes.

12. Procédé selon la revendication 10 ou 11, caractérisé en ce que l'on mélange entre 250 et 1000 g de composition agglomérée par litre de liquide.

**13.** Composition ayant une structure crémeuse stable et homogène, caractérisée en ce qu'elle comprend une composition agglomérée selon l'une quelconque des revendications 1 à 3.

**14.** Produit alimentaire caractérisé en ce qu'il comprend une composition agglomérée selon l'une quelconque des revendications 1 à 3.

**15.** Utilisation d'une composition agglomérée selon l'une quelconque des revendications 1 à 3 pour la préparation d'une composition ayant une structure crémeuse stable et homogène.

**16.** Utilisation d'une composition agglomérée selon l'une quelconque des revendications 1 à 3 pour la préparation d'un produit alimentaire.

**Claims**

**1.** Agglomerated composition, characterized in that said composition comprises at least one fructan and said agglomerated composition is an instant colloidal dispersion composition and is able to form a stable and homogeneous creamy structure by mixing said agglomerated composition and a liquid such as water without using high shear forces.

**2.** Composition according to claim 1, characterized in that the fructan is a linear fructan, a branched fructan and/or a partially hydrolyzed fructan.

**3.** Composition according to claim 1 or 2, characterized in that the fructan is inuline.

**4.** Process for preparing an agglomerated composition according to any of preceding claims, characterized in that it comprises the step consisting in moistening a fructan or a mixture of fructans in granule and/or powder form with water in liquid or steam phase in an agglomeration chamber in the presence of warm air and then in cooling and sieving the agglomerated composition in order to retain the product of suitable grain size by recycling fines and off-specification agglomerates.

**5.** Process according to claim 4, characterized in that between 40% and 90% by weight of water with respect to the fructan or the mixture of fructans are dosed into a vertical agglomeration chamber, with the room temperature in said chamber being comprised between 70°C and 100°C, the holding time in said agglomeration chamber being of an order of a few tens of seconds.

**6.** Process according to claim 4, characterized in that the fructan or the mixture of fructans is introduced into the chamber in a solution form that is also used to moisten the recycled fines and off-specification agglomerates.

**7.** Process according to any of claims 4 to 6, characterized in that the fructan used is inuline in a concentration of 1% to 50% of dry material.

**8.** Process according to any of claims 4 to 7, characterized in that upon the final drying step, the moisture content of the product is reduced to less than 5%.

**9.** Process according to any of claims 4 to 8, characterized in that the final drying step and the subsequent cooling step are performed with a fluidized bed.

**10.** Process for preparing a composition having a stable and homogeneous creamy structure, characterized in that the agglomerated composition is mixed according to any of claims 1 to 3 with a liquid without using high shear forces.

**11.** Process according to claim 10, characterized in that the mixing step is performed under stirring without using high shear forces.

**12.** Process according to claim 10 or 11, characterized in that between 250 g and 1000 g of agglomerated composition are mixed per litre of liquid.

**13.** Composition having a stable and homogeneous creamy structure, characterized in that it comprises an agglomerated composition according to any of claims 1 to 3.

**14.** Foodstuff characterized in that it comprises an agglomerated composition according to any of claims 1 to 3.

**15.** Use of an agglomerated composition according to any of claims 1 to 3 for the preparation of a composition having a stable and homogeneous creamy structure.

**16.** Use of an agglomerated composition according to any of claims 1 to 3 for the preparation of a foodstuff.

**Patentansprüche**

**1.** Agglomerierte Mischung, dadurch gekennzeichnet, daß sie wenigstens ein Fruktan enthält, daß die agglomerierte Mischung zu einer sofortigen kolloidalen Dispersion führt und in der Lage ist eine stabile und homogene sämige Struktur zu erzeugen wenn die besagte agglomerierte Mischung mit einer Flüssigkeit wie Wasser vermengt wird, ohne dabei auf starke Scherkräfte zurückgreifen zu müssen.

**2.** Mischung gemäß Anspruch 1, dadurch gekennzeichnet, daß es sich bei dem Fruktan um ein lineares Fruktan, ein verzweigtes Fruktan und / oder ein teilweise hydrolisiertes Fruktan handelt.

**3.** Mischung gemäß Anspruch 1 oder 2, dadurch gekennzeichnet, daß es sich bei dem Fruktan um Inulin handelt.

**4.** Zubereitungsverfahren für eine agglomerierte Mischung gemäß irgendeinem der oben angeführten Ansprüche, dadurch gekennzeichnet, daß es darin besteht, das Fruktan oder eine Mischung von Fruktanen in Form von Pulver und/oder in Form von Körnern mit der Hilfe von Wasser in der flüssigen Phase oder in der dampfförmigen Phase in einer Agglomerierungskammer in Gegenwart von warmer Luft zu befeuchten, und diese agglomerierte Mischung dann abzukühlen und zu sieben, um das Produkt von angemessener Granulometrie zurück zu halten und die Feinanteile und die nicht der Norm entsprechenden Agglomerate wieder zurückzuführen.

**5.** Verfahren gemäß Anspruch 4, dadurch gekennzeichnet, daß man in der Agglomerierungskammer zwischen 40 und 90 Gew. -% Wasser in Bezug auf das Fruktan oder auf die Mischung von Fruktanen dosiert, wobei die Temperatur in dieser Kammer zwischen 70°C und 100°C liegt und die Aufenthaltszeit in der besagten Agglomerierungskammer in der Größenordnung von einigen Zehnern von Sekunden liegt.

**6.** Verfahren gemäß Anspruch 4, dadurch gekennzeichnet, daß das Fruktan oder die Mischung von Fruktanen in der Form einer Lösung in die Agglomerierungskammer eingeführt wird, wobei diese Lösung ebenfalls dazu dient die wieder zurückgeführten Feinanteile und die nicht der Norm entsprechenden Agglomerate zu befeuchten.

**7.** Verfahren gemäß irgendeinem der Ansprüche 4 bis 6, dadurch gekennzeichnet, daß es sich bei dem verwendeten Fruktan um Inulin in einem Konzentrationsbereich von 1 bis 50% Trockenmaterie handelt.

**8.** Verfahren gemäß irgendeinem der Ansprüche 4 bis 7, dadurch gekennzeichnet, daß man bei dem endgültigen Trocknen, den Feuchtigkeitsgehalt des Produktes bis auf einen Wert von weniger als 5% reduziert.

**9.** Verfahren gemäß irgendeinem der Ansprüche 4 bis 8, dadurch gekennzeichnet, daß das endgültige Trocknen und das nachfolgende Abkühlen mit der Hilfe eines Fließbettes vorgenommen werden.

**10.** Verfahren für die Zubereitung einer Mischung mit einer stabilen und homogenen sämigen Struktur, dadurch gekennzeichnet, daß man die agglomerierte Mischung gemäß irgendeinem der Ansprüche 1 bis 3 mit einer Flüssigkeit vermengt, ohne daß starke Scherkräfte in Anspruch genommen werden.

**11.** Verfahren gemäß Anspruch 10, dadurch gekennzeichnet, daß die Vermengung unter Schütteln ohne Einsatz von starken Scherkräften durchgeführt wird.

**12.** Verfahren gemäß Anspruch 10 oder 11, dadurch gekennzeichnet, daß man zwischen 250 und 1000 Gramm der agglomerierten Mischung pro Liter Flüssigkeit vermischt.

**13.** Mischung mit einer stabilen und homogenen sämigen Struktur, dadurch gekennzeichnet, daß sie eine agglomerierte Mischung gemäß irgendeinem der Ansprüche 1 bis 3 enthält.

**14.** Nahrungsmittel, dadurch gekennzeichnet, daß es eine agglomerierte Mischung gemäß irgendeinem der Ansprüche 1 bis 3 enthält.

15. Verwendung einer agglomerierten Mischung gemäß irgendeinem der Ansprüche 1 bis 3 für die Zubereitung einer Mischung mit einer stabilen und homogenen sämigen Struktur.

16. Verwendung einer agglomerierten Mischung gemäß irgendeinem der Ansprüche 1 bis 3 für die Zubereitung eines Nahrungsmittels.

FIG.1

FIG.2